(19) Europäisches Patentamt
European Patent Office
Office européen des brevets

(11) Publication number: **0 364 181 B1**

(12) **EUROPEAN PATENT SPECIFICATION**

(45) Date of publication of patent specification: **01.03.95**

(51) Int. Cl.[6]: **C08K 3/22**, C08K 3/26, C08L 81/02

(21) Application number: **89310281.4**

(22) Date of filing: **06.10.89**

(54) **Polyarylene sulfide resin composition and molded article thereof combined with metal.**

(30) Priority: **14.10.88 JP 259180/88**

(43) Date of publication of application:
**18.04.90 Bulletin 90/16**

(45) Publication of the grant of the patent:
**01.03.95 Bulletin 95/09**

(84) Designated Contracting States:
**AT BE CH DE ES FR GB GR IT LI LU NL SE**

(56) References cited:
**EP-A- 0 119 607**
**US-A- 4 017 450**

(73) Proprietor: **POLYPLASTICS CO. LTD.**
**3-13, Azuchicho, 2-chome**
**Chuo-Ku**
**Osaka-shi**
**Osaka 541 (JP)**

(72) Inventor: **Nitoh, Toshikatsu**
**12-11, Imaizumi 3-chome**
**Fuji-shi**
**Shizuoka (JP)**
Inventor: **Nakamori, Kiyokazu**
**885-11, Miyajima**
**Fuji-shi**
**Shizuoka (JP)**
Inventor: **Tsukamoto, Yoshihito**
**3-16, Higashikokubun 2-chome**
**Ichikawa-shi**
**Chiba (JP)**

(74) Representative: **Jackson, Peter et al**
**HYDE, HEIDE & O'DONNELL**
**10-12 Priests Bridge**
**London SW15 5JE (GB)**

**EP 0 364 181 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an improved polyarylene sulfide resin composition. More particularly, the present invention is concerned with a polyarylene sulfide resin composition and a molded article thereof improved in the prevention of corrosion and staining of a metal employed in combination with the resin composition such as in an electrical contact.

[Prior Art]

In recent years, thermoplastic resins having a combination of high heat resistance and chemical resistance with flame retardancy have been required for electrical and electronic equipment component materials, automobile equipment component materials, and chemical equipment component materials.

Polyarylene sulfide resins, including polyphenylene sulfide, are one type of resins capable of meeting this requirement, and the demand for them is also increased because of their low cost.

However, this resin is characterized by having a sulfur atom in its molecular structure and has a drawback that the raw material for production of the resin contains both sulfur and chlorine atoms and forms by-products containing a large amount of chlorine during synthesis of the resin. This brings about a problem that when this resin is used as a material for molded components incorporating metals, such as metallic contacts and plated or deposited metallic surfaces, the metallic materials in the component are corroded and stained. Therefore in such applications the above resin fails to achieve its required function.

Because of the above-described problem, at the present time, the resin cannot be used particularly for components which are continuously used at a high temperature and have a metallic contact, which limits the range of applications of the resin.

The following expedients are known as a technique for solving the above problem.

(1) In the manufacturing process of the resin, the amount of inclusion of impurities such as sodium chloride in the resin is reduced by intensively purifying the resin.

(2) A trapping agent is positively added to suppress the formation of corrosive impurities. Examples of the trapping agent include calcium carbonate, lithium carbonate (cf. Japanese Patent Laid-Open Nos. 162752/1979 and 229949/1985), hydrotalcite (cf. Japanese Patent Laid-Open No. 275353/1986), and zinc oxide (cf. Japanese Patent Laid-Open No. 181408/1984, Japanese Patent Publication No. 45711/1988 and U.S. Patent Nos. 4659761 and 4740425).

(3) The resin is treated at a temperature as high as 200 °C or above to reduce a corrosive gas before use.

However, these methods have respective problems and do not provide any satisfactory solution to the problem. Specifically, according to the tests conducted by the present inventors, method (1) wherein the resin is intensively washed can remarkably reduce the content of sodium chloride but scarcely exhibits any improvement in the prevention of corrosion of metallic components contained in molded articles, e.g., silver, aluminum, or iron.

In method (2), according to the follow-up experiment conducted by the present inventors, lithium carbonate reduces generation of a chlorinated gas and exhibits the effect of preventing corrosion of some metals such as iron but exerts no effect on silver and its alloys usually employed in the metallic contact. Further, all of calcium carbonate, hydrotalcite, zinc oxide, etc. hardly exhibit the effect of preventing corrosion of silver.

According to the follow-up experiment conducted by the present inventors, method (3) undergoes a remarkable influence of side effects such as discoloration and deterioration of the resin matrix at a high temperature and exhibits only a slight effect of preventing corrosion of metals such as silver, aluminum, iron, etc., so that this method has not been regarded as usable for practical use.

[ Summary of the Invention ]

In order to improve the prevention of the corrosion and staining of a metal during and after molding without detriment to excellent heat resistance, solvent resistance, flame retardancy, and mechanical properties of a polyarylene sulfide resin composition, particularly a polyphenylene sulfide resin composition, the present inventors have noted gases generated when a resin composition is heated and searched for an additive for trapping these gases.

Various basic compounds are expected as a trapping agent for these gases. Although addition of various trapping agents has been reported in the above-described patent publications as well, no significant effect of improving the prevention of corrosion and staining of a metal was observed in the follow-up

experiment conducted by the present inventors. Accordingly, considering the reactivity of these trapping agents, the present inventors have selected zinc compounds from the viewpoint of requirements such that the trapping agent particle should be active as much as possible, particularly reactive with a sulfur-containing gas and that the reaction product should be hardly colored, and have made extensive and intensive studies on the zinc compounds. As a result, they have found that although zinc oxide hardly functions as a trapping agent, zinc carbonate or zinc hydroxide, or a double salt or a mixture thereof remarkably suppresses the corrosion and staining of metals, such as silver, aluminium, or iron, caused by a polyarylene sulfide resin composition, which has led to the completion the present invention.

Thus according to the invention there is provided a polyarylene sulfide resin composition which comprises (A) 100 parts by weight of a polyarylene sulfide resin and (B) 0.05 to 100 parts by weight of at least one gas-trapping agent selected from zinc carbonate, zinc hydroxide and a complex salt of zinc carbonate and zinc hydroxide. The composition preferably further comprises (C) up to 400 parts by weight of an inorganic filler other than the gas-trapping agent (B) in way of material, the filler being in the form of fibers, particles and/or plates.

The composition preferably comprises as the filler 10 to 250 parts by weight of glass fibers, carbon fibers or particles or plates, alternatively 10 to 400 parts by weight of glass fibers and another filler in the form of particles or plates.

A filler in the form of plates is alternatively described herein as a flaky filler.

The invention provides a molded article of the composition as defined above and then parts for an electric or electronic appliance which comprises a molded article of the composition as defined above and a connection made from a metal.

Accordingly, the present invention relates to a polyarylene sulfide resin composition, characterized by comprising:

(A) 100 parts by weight of a polyarylene sulfide resin; and, incorporated therein,

(B) 0.05 to 100 parts by weight, based on 100 parts by weight of component (A), of at least one member selected from zinc carbonate, zinc hydroxide, and a double salt composed of both; and

(C) 0 to 400 parts by weight, based on 100 parts by weight of component (A), of an inorganic filler selected from a fibrous filler, a particulate or flaky filler other than component (B) and a mixture of both, and the present invention relates also to a molded article comprising a combination of said polyarylene sulfide resin composition and a metal.

The base resin as component (A) of the composition of the present invention is a polyarylene sulfide resin and mainly comprises the following repeating units -(-Ar-S-)-, wherein Ar is an arylene group.

Examples of the arylene group (-Ar-) include:

a p-phenylene group

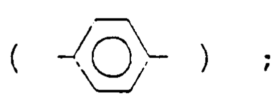

a m-phenylene group

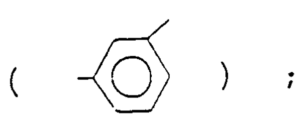

an o-phenylene group

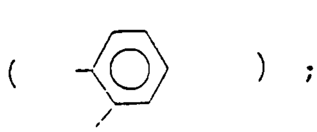

a substituted phenylene group

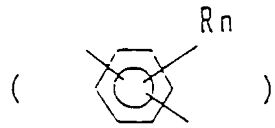

wherein R is an alkyl group, preferably a $C_1$ to $C_6$ alkyl group or a phenyl group and n is an integer of 1 to 4;

a p,p'-diphenylene sulfone group

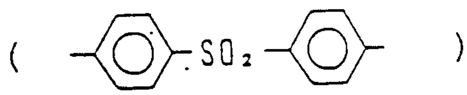 ;

a p,p'-biphenylene group

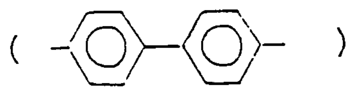 ;

a p,p'-diphenylene ether group

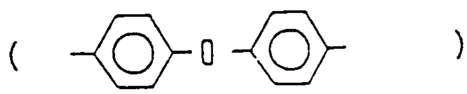 ;

a p,p'-diphenylene carbonyl group

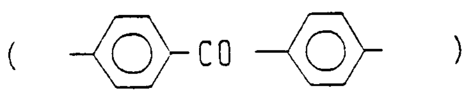 ;

and

a naphthalene group

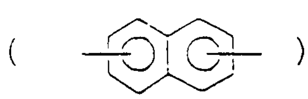 .

In this case, it is possible to use a polymer comprising the same repeating units among arylene sulfide groups constituting the above-described arylene groups, i.e., a homopolymer. In some cases, a copolymer containing different kinds of repeating units is preferable from the viewpoint of workability of the composition.

The homopolymer is particularly preferable a substantially linear polymer comprising p-phenylene sulfide groups as the repeating unit wherein a p-phenylene group is used as the arylene group.

The copolymer may comprise two or more different kinds of arylene sulfide groups composed of the above-described arylene groups. Among them, combinations including a p-phenylene sulfide group and a m-phenylene sulfide group are particularly preferred. In particular, a substantially linear polymer comprising at least 50 % by mole, preferably at least 60 % by mole, still preferably at least 70 % by mole of p-phenylene sulfide groups is suitable from the viewpoint of properties such as heat resistance, moldability, and mechanical properties.

The m-phenylene sulfide groups are contained in an amount of preferably 5 to 50 % by mole, particularly preferably 10 to 25 % by mole.

In this case, a copolymer comprising repeating units of the components in the block form (e.g., one described in Japanese Patent Laid-Open No. 14228/1986) is preferably used because it is substantially the same as the copolymer comprising repeating units of the components in the random form in the workability but superior in the heat resistance and mechanical properties.

The polyarylene sulfide resin as component (A) used in the present invention may be a polymer improved in its moldability by raising the melt viscosity through curing of the above-described polymer by taking advantage of oxidation crosslinking or thermal crosslinking or may be a polymer having a substantially linear structure and prepared by polycondensation of monomers mainly composed of bifunctional monomers. The latter polymer having a substantially linear structure is usually preferable because the molded article thereof exhibits better properties.

Besides the above-described polymers, a blended resin prepared by blending a crosslinked polyarylene sulfide resin capable of exhibiting gelation when melted and prepared through polymerization of a monomer mixture containing a monomer having three or more functional groups as part of the monomer component with the above-described substantially linear polymer may be also used as the base resin of the present invention.

Further, besides the polyarylene sulfide resin, it is also possible to use as an auxiliary a small amount of another thermoplastic resin as far as it exerts no adverse effect on the purpose. The other thermoplastic resin used therein may be any thermoplastic resin stable at a high temperature.

Examples of the other thermoplastic resin include aromatic polyesters of an aromatic dicarboxylic acid with a diol, such as polyethylene terephthalate or polybutylene terephthalate, and those of a hydroxy carboxylic acid, polyamide, polycarbonate, ABS, polyphenylene oxide, polyalkyl acrylate, polyacetal, polysulfone, polyether sulfone, polyether imide, polyether ketone, fluororesin, etc. These thermoplastic resins may be used also in the form of a mixture of two or more of them.

Component (B) used in the present invention is any one of zinc carbonate, zinc hydroxide and a double salt or a mixture thereof.

Zinc carbonate and zinc hydroxide are generally prepared by adding a salt of carbonic acid, such as soda ash, or other hydroxide to an aqueous solution of zinc salt, such as zinc sulfate, zinc chloride, zinc nitrate or zinc acetate, to form a precipitate and washing, filtering, and drying the precipitate. The resultant substance is a mixture of zinc carbonate with zinc hydroxide and called "basic zinc carbonate". This substance is one of the substances preferably used in the present invention.

Besides the above substances, zinc orthocarbonate prepared by adding sodium bicarbonate to an aqueous solution of a zinc salt while blowing a carbon dioxide gas into the system is effective in attaining the purpose of the present invention. However, in the case of zinc oxide, the effect intended in the present invention is so small that zinc oxide is not suitable for use in the present invention.

Further, other zinc compounds, e.g. zinc chloride, zinc bromide, zinc fluoride, zinc iodide, zinc sulfate, zinc nitrate, zinc sulfite, zinc thiocyanate, zinc formate, zinc acetate, zinc propionate, zinc benzoate, zinc oxalate, zinc lactate, zinc tartrate, zinc oleate, zinc stearate, zinc phosphate, zinc phosphite, zinc hypophosphite, zinc hydrogenphosphite, zinc pyrophosphate, zinc chromate, zinc silicate, and zinc silicofluoride are unsuitable for use in the present invention because they are not only difficult to safely and stably knead with the resin from the viewpoint of deliquescence, acidity, thermal resistance, toxicity, etc. but also low in the effect intended in the present invention.

Further, metallic zinc powder as well is so low in the effect intended in the present invention that it is unsuitable for use in the present invention.

The amount of component (B) used in the present invention is 0.05 to 100 parts by weight, preferably 0.1 to 40 parts by weight per 100 parts by weight of a polyarylene sulfide resin as component (A). When the amount is less than 0.05 part by weight, the effect intended in the present invention is poor, while when the amount is too large, there arises a problem of reduction in the mechanical strength of the molded article, which is unfavorable.

Although the inorganic filler as component (C) used in the present invention is not always necessary, it is preferred to incorporate this component for the purpose of preparing a molded article excellent in the performance such as mechanical strengths, thermal resistance, dimensional stability (resistance to deformation and warping), and electrical properties. Any of fibrous, particulate and flaky fillers may be used as the inorganic filler depending upon the purposes.

Examples of the fibrous filler include inorganic fibrous substances such as glass fiber, asbestos fiber, carbon fiber, silica fiber, silica-alumina fiber, zirconia fiber, boron nitride fiber, silicon nitride fiber, boron fiber and potassium titanate fiber, and fibrous metals such as stainless steel, aluminum, titanium, copper, and brass. Among them, glass fiber and carbon fiber are representative fibrous fillers. It is also possible to use high-melting organic fibrous materials such as polyamides, fluororesins, and acrylic resins.

Examples of the particulate fillers include carbon black, silicates such as silica, quartz powder, glass bead, glass powder, calcium silicate, aluminum silicate, kaolin, talc, clay, diatomaceous earth and wollastonite, metallic oxides such as iron oxide, titanium oxide and alumina, metal salts of carbonic acid such as calcium carbonate and magnesium carbonate, metal salts of sulfuric acid such as calcium sulfate and barium sulfate, and other fillers such as silicon carbide, silicon nitride, boron nitride, and various powdery metals.

Examples of the flaky filler include mica, glass flake, and various metal foils.

These inorganic fillers may be used alone or in any combination of two or more of them. A combination of a fibrous filler, particularly glass fiber or carbon fiber with a particulate or flaky filler is preferred particularly for the purpose of imparting a combination of mechanical properties with dimensional stability, electrical properties, etc.

It is preferred to use a binder or a surface treatment together with the filler according to need. Examples thereof include functional compounds such as epoxy compounds, isocyanate compounds, silane compounds, and titanate compounds. These compounds may be used by previously conducting surface treatment or binding treatment, or alternatively may be added simultaneously in the preparation of the material.

The amount of the inorganic filler as component (C) is 0 to 400 parts by weight, preferably 10 to 250 parts by weight per 100 parts by weight of the polyarylene sulfide resin. When the amount is less than 10 parts by weight, the mechanical strengths are poor, while when the amount is too large, not only it becomes difficult to conduct molding operation but also there occurs a problem of reduction in the mechanical strengths of the molded article.

The composition of the present invention may be mixed with known substances which are added to ordinary thermoplastic and thermosetting resins, i.e., plasticizers, stabilizers such as antioxidants and ultraviolet absorbers, antistatic agents, surface treatments, surfactants, flame retardants, colorants such as dyes and pigments and lubricants for improving the flowability and releasability, lubricating agents, and crystallization accelerators (nucleating agents) depending upon the intended performance in such an amount as will not hinder the purpose of the present invention.

The resin composition of the present invention can be prepared by making use of facilities and methods employed in the preparation of ordinary synthetic resin compositions. They include, for example, a method which comprises mixing necessary components, kneading the mixture with a single-screw or twin-screw extruder, and conducting extrusion to prepare pellets for molding; and a method wherein in order to improve the dispersion and mixing of each component, part or the whole of the resin components are pulverized, and mixing and melt extrusion are then conducted.

The resin composition thus prepared is molded by injection molding, extrusion molding, vacuum molding, compression molding, etc. and suitable for a molded article combined with a metal or a molded article to be brought into contact with a metal, such as an outsert or an insert, by virtue of less tendency to corrode and stain the metal, particularly useful not only for electrical and electronic components etc. having a metallic contact but also from the general point of view because of less tendency to bring about corrosion and staining of a cylinder mold during fabrication.

As is apparent from the foregoing description, the polyarylene sulfide resin composition containing a zinc compound incorporated thereinto according to the present invention exhibits the following effects.

(1) Since corrosion and staining of a metal can be greatly reduced when it is used at a high temperature, application to electrical and electronic components having a metallic contact brings about a significant reduction in the trouble of contamination of the contact. Further, the cost of a component can be reduced because it becomes possible to use a polyarylene sulfide resin in preparing a component which could not be prepared without an expensive material hitherto.

(2) Excellent thermal resistance, solvent resistance, and flame retardancy characteristic of a polyarylene sulfide resin are maintained. Further, a lowering in the mechanical properties is small.

(3) Occurrence of an odor characteristic of a polyarylene sulfide resin composition during kneading and molding is reduced, which contributes to an improvement in the working environment. Further, it is possible to conduct economical and efficient working because corrosion and staining of a cylinder, a mold, etc. hardly occur during molding.

(4) Since the additive is inexpensive and has excellent extruding and kneading properties, the resin composition can be produced at a low cost.
(5) The additive is non-toxic and safe as opposed to other heavy metals.

[Examples]

Examples 1 to 14 and Comparative Examples 1 to 7

As shown in Table 1, a zinc compound shown in Table 1 was added as component (B) to a substantially linear polyphenylene sulfide resin (trade mark of "Fortron"; a product of Kureha Chemical Industry Co., Ltd.) as component (A) and then mixed therewith by a Henschel mixer for 2 min.

Then, an inorganic filler as component (C) was added thereto in an amount shown in Table 1 and mixed by means of a blender for 30 sec. The mixture was kneaded by means of an extruder at a cylinder temperature of 310 °C to prepare pellets of a polyphenylene sulfide resin composition.

22 g of the pellets were put on the bottom of a test tube having an outer diameter of 30 mm and a height of 150 mm, and a metallic sheet shown in Table 1 was cut into a size of 2 mm x 12 mm and suspended with a thread in such a manner that the metallic sheet was positioned at a height of about 60 mm from the uppermost pellets. A stopper was put on the top of the test tube, and the test tube was then placed in a blast dryer to conduct treatment under evaluation test conditions shown in Table 1. The metallic sheet was taken out of the test tube and subjected to visual evaluation of appearance and measurement of electrical resistance of the surface under a contact pressure of 10 g with a milliohmmeter to evaluate corrosive and staining properties of the resin composition. The results are shown in Table 1.

The above-described pellets were molded into an ASTM specimen with an injection molding machine at a cylinder temperature of 320 °C and a mold temperature of 150 °C, and the specimen was subjected to measurement of the tensile strength and tensile elongation.

Table 1

| | Composition | | | | | Evaluation of corrosion of metal | | | | Evaluation of general properties | |
|---|---|---|---|---|---|---|---|---|---|---|---|
| | component (A) polyphenylene sulfide resin [pt.wt.] | component (B) additive [kind] | component (B) additive [pt.wt.] | component (C) filler [kind] | component (C) filler [pt.wt.] | metal | evaluation test conditions | electrical resistance [mΩ] | evaluation of appearance | tensile strength [kgf/cm$^2$] | tensile elongation [%] |
| Ex. 1 | 100 | transparent[(a)] zinc white | 0.05 | glass[(b)] fiber | 70 | silver | 265°C x 1 hr | 31 | small discoloration | 1750 | 1.6 |
| Ex. 2 | 100 | transparent[(a)] zinc white | 0.1 | glass[(b)] fiber | 70 | silver | 265°C x 1 hr | 22 | slight discoloration | 1740 | 1.6 |
| Ex. 3 | 100 | transparent[(a)] zinc white | 1 | glass[(b)] fiber | 70 | silver | 265°C x 1 hr | 12 | no discoloration | 1650 | 1.5 |
| Ex. 4 | 100 | transparent[(a)] zinc white | 10 | glass[(b)] fiber | 70 | silver | 265°C x 1 hr | 9 | no discoloration | 1400 | 1.1 |
| Ex. 5 | 100 | transparent[(a)] zinc white | 70 | glass[(b)] fiber | 70 | silver | 265°C x 1 hr | 10 | no discoloration | 1320 | 1.0 |
| Ex. 6 | 100 | transparent[(a)] zinc white | 1 | - | - | silver | 265°C x 1 hr | 13 | no discoloration | 870 | 4.0 |
| Ex. 7 | 100 | transparent[(a)] zinc white | 1 | glass[(b)] fiber<br>calcium carbonate | 100<br>100 | silver | 265°C x 1 hr | 9 | no discoloration | 1420 | 1.0 |
| Ex. 8 | 100 | transparent[(a)] zinc white | 1 | glass[(b)] fiber | 70 | silver | 150°C x 1 hr | 14 | no discoloration | 1650 | 1.5 |
| Ex. 9 | 100 | transparent[(a)] zinc white | 1 | glass[(b)] fiber | 70 | silver | 265°C x 1 hr | 21 | slight discoloration | 1650 | 1.5 |
| Ex. 10 | 100 | transparent[(a)] zinc white | 1 | glass[(b)] fiber | 70 | alloy[(c)] | 265°C x 1 hr | 12 | no discoloration | 1650 | 1.5 |
| Ex. 11 | 100 | zinc orthocarbonate | 1 | glass[(b)] fiber | 70 | silver | 265°C x 1 hr | 9 | no discoloration | 1570 | 1.4 |
| Ex. 12 | 100 | zinc orthocarbonate | 1 | glass[(b)] fiber | 70 | silver | 265°C x 1 hr | 10 | no discoloration | 1090 | 0.9 |

Table 1 (continued)

| | Composition | | | | | Evaluation of corrosion of metal | | | | Evaluation of general properties | |
|---|---|---|---|---|---|---|---|---|---|---|---|
| | component (A) polyphenylene sulfide resin [pt.wt.] | component (B) additive [kind] | [pt.wt.] | component (C) filler [kind] | [pt.wt.] | metal | evaluation test conditions | electrical resistance [mΩ] | evaluation of appearance | tensile strength [kgf/cm$^2$] | tensile elongation [%] |
| Ex. 13 | 100 | zinc hydroxide | 1 | glass(b) fiber | 70 | silver | 265°C x 1 hr | 10 | no discoloration | 1490 | 1.3 |
| Ex. 14 | 100 | zinc hydroxide | 70 | glass(b) fiber | 70 | silver | 265°C x 1 hr | 9 | no discoloration | 1020 | 0.9 |
| Comp. Ex. 1 | 100 | - | - | glass(b) fiber | 70 | silver | 265°C x 1 hr | 430 | remarkable discoloration | 1750 | 1.6 |
| Comp. Ex. 2 | 100 | zinc oxide(d) | 1 | glass(b) fiber | 70 | silver | 265°C x 1 hr | 175 | remarkable discoloration | 1720 | 1.6 |
| Comp. Ex. 3 | 100 | zinc oxide(e) | 1 | glass(b) fiber | 70 | silver | 265°C x 1 hr | 150 | remarkable discoloration | 1740 | 1.6 |
| Comp. Ex. 4 | 100 | - | - | glass(b) fiber<br>calcium carbonate | 100<br>100 | silver | 265°C x 1 hr | 390 | remarkable discoloration | 1450 | 1.0 |
| Comp. Ex. 5 | 100 | lithium carbonate | 1 | glass(b) fiber | 70 | silver | 265°C x 1 hr | 295 | remarkable discoloration | 1610 | 1.5 |
| Comp. Ex. 6 | 100 | zinc sulfate | 1 | glass(b) fiber | 70 | silver | 265°C x 1 hr | 530 | remarkable discoloration | 1280 | 1.0 |
| Comp. Ex. 7 | 100 | zinc chloride | 1 | glass(b) fiber | 70 | silver | 265°C x 1 hr | 815 | remarkable discoloration | 1350 | 1.1 |

Note) (a): $2ZnCO_3 \cdot 3Zn(OH)_2$

(b): chopped strand having a diameter of 13 μm and a length of 3 mm

(c): silver-palladium-copper alloy

(d): zinc white having a ZnO content of 98.5 % and a mean particle diameter of 0.65 μm (according to American process)

(e): zinc white having a ZnO content of 99.7 % and a mean particle diameter of 0.27 μm (according to French process)

Example 15 and Comparative Example 8

Pellets prepared in Example 3 and Comparative Example 1 were injection molded into components having a brass-nickel-plated lead frame inserted thereinto by an injection molding machine through the use of a mold for a rotary switch housing at a cylinder temperature of 320 °C and a mold temperature of 150 °C.

Separately, the same pellets were injection molded into rotor components by making use of a mold for a rotor component, and a brass-nickel-plated contact was then jointed thereto by caulking. Further, an O-ring made of silicone rubber was mounted on the rotors. The same pellets were molded into switch lid components by making use of a mold for a switch lid, and the rotors were respectively integrated into the switch lids. Then, the switch lids were inserted into the housings, and the lids were subjected to ultrasonic welding to assemble rotary switches. The rotary switches thus prepared were treated in a blast dryer under test conditions shown in Table 2 and then subjected to functional tests. The results are shown in Table 2.

Example 16 and Comparative Example 9

Pellets prepared in Example 3 and Comparative Example 1 were injection molded into rotor components by an injection molding machine through the use of a mold for a rotary component at a cylinder temperature of 320 °C and a mold temperature of 150 °C. A silver-palladium-copper alloy contact was jointed thereto by caulking to prepare rotor components.

These rotor components were assembled through an O-ring to a separately prepared epoxy resin housing having a resistor mounted thereon to prepare a rotary switch (semifixed volume). The molded components thus prepared were treated in a blast dryer under test conditions shown in Table 3 and then subjected to functional tests. The results are shown in Table 3.

Table 2

| | Molded article | Composition | | | | | Combination metal | Evaluation | |
|---|---|---|---|---|---|---|---|---|---|
| | | component (A) polyphenylene sulfide resin [pt.wt.] | component (B) additive [kind] | [pt.wt.] | component (C) filler [kind] | [pt.wt.] | | test conditions | results |
| Ex. 15 | rotary switch | 100 | transparent[a] zinc white | 1 | glass[b] fiber | 70 | insert molding of brass-nickel-plated lead frame | 150 x 168 hr | excellent current value in changeover test of switch |
| Comp. Ex. 8 | rotary switch | 100 | - | - | glass[b] fiber | 70 | insert molding of brass-nickel-plated lead frame | 150 x 168 hr | abnormal current value in changeover test of switch |

Note) (a): $2ZnCO_3 \cdot 3Zn(OH)_2$

(b): chopped strand having a diameter of 13 μm and a length of 3 mm

Table 3

| | Molded article | Composition | | | | | Combination metal | Evaluation | |
|---|---|---|---|---|---|---|---|---|---|
| | | component (A) polyphenylene sulfide resin [pt.wt.] | component (B) additive [kind] | [pt.wt.] | component (C) filler [kind] | [pt.wt.] | | test conditions | results |
| Ex. 16 | semifixed volume | 100 | transparent[a] zinc white | 1 | glass[b] fiber | 70 | integration of silver-palladium-copper alloy frame | 265 x 1 hr | excellent resistance value in changeover test |
| Comp. Ex. 9 | semifixed volume | 100 | - | - | glass[b] fiber | 70 | integration of silver-palladium-copper alloy frame | 265 x 1 hr | abnormal resistance value in changeover test |

Note) (a): $2ZnCO_3 \cdot 3Zn(OH)_2$

(b): chopped strand having a diameter of 13 μm and a length of 3 mm

Examples 17 and Comparative Example 10

As shown in Table 4, a zinc compound shown in Table 4 was added as component (B) to a polyphenylene sulfide resin (trade mark of "Fortron KPS"; a product of Kureha Chemical Industry Co., Ltd.) as component (A) and then mixed therewith by a Henschel mixer for 2 min.

Then, an inorganic filler (calcium carbonate) as component (C) was added thereto in an amount shown in Table 4 and mixed by means of a blender for 30 sec. The mixture was kneaded by means of an extruder at a cylinder temperature of 310 °C to prepare pellets of a polyphenylene sulfide resin composition. The obtained pellets were molded into an injection molded article with an injection molding machine through the use of a mold for a light reflector plate at a cylinder temperature of 320 °C and a mold temperature of 150 °C. This molded article was subjected to ultrasonic cleaning with acetone, and aluminum was vacuum deposited in a thickness of 20 µm on the reflecting surface to prepare a light reflector plate. The reflector plate thus prepared was placed in a blast dryer to conduct treatment under evaluation test conditions shown in Table 4 and then subjected to appearance evaluation. The results are shown in Table 4.

Table 4

| | Molded article | Composition | | | | | Combination metal | Evaluation | |
|---|---|---|---|---|---|---|---|---|---|
| | | component (A) polyphenylene sulfide resin [pt.wt.] | component (B) additive [kind] | [pt.wt.] | component (C) filler [kind] | [pt.wt.] | | test conditions | results |
| Ex. 17 | light reflector plate | 100 | transparent zinc white[(a)] | 1 | calcium carbonate | 150 | vacuum deposition of aluminum in a thickness of 20 µm | 200°C x 3 hr | excellent surface |
| Comp. Ex. 10 | light reflector plate | 100 | - | - | calcium carbonate | 150 | vacuum deposition of aluminum in a thickness of 20 µm | 200°C x 3 hr | occurrence of mixture corrosion and staining spots on the surface |

Note) (a): $2ZnCO_3 \cdot 3Zn(OH)_2$

## Claims

1. A polyarylene sulfide resin composition which comprises (A) 100 parts by weight of a polyarylene sulfide resin and (B) 0.05 to 100 parts by weight of at least one gas-trapping agent selected from zinc

carbonate, zinc hydroxide and a complex salt of zinc carbonate and zinc hydroxide.

2. A composition as claimed in Claim 1 in which the polyarylene sulfide resin (A) is a substantially linear homopolymer comprising p-phenylene sulfide groups as the repeating units.

3. A composition as claimed in Claim 1 in which the polyarylene sulfide resin (A) is a copolymer comprising p-phenylene sulfide and m-phenylene sulfide groups.

4. A composition as claimed in any preceding Claim, in which the amount of component (B) is 0.1 to 40 parts by weight per 100 parts by weight of component (A).

5. A composition as claimed in any preceding Claim which further comprises (C) up to 400 parts by weight of an inorganic filler other than the gas-trapping agent (B), the filler being in the form of fibers, particles and/or plates.

6. A composition as claimed in Claim 5, in which the amount of filler (C) is 10 to 250 parts by weight per 100 parts by weight of component (A).

7. A composition as claimed in Claim 5 or Claim 6, in which the filler (C) comprises glass fibers or carbon fibers.

8. A composition as claimed in Claim 5, which comprises as the filler (C) 10 to 400 parts by weight of glass fibers and another filler in the form of particles or plates.

9. A molded article of the composition as defined in any preceding claim.

10. Parts for an electric or electronic appliance which comprises a molded article of the composition as defined in any preceding claim and a connection made from metal.

## Patentansprüche

1. Polyarylensulfid-Harz-Zusammensetzung umfassend (A) 100 Gewichtsteile eines Polyarylensulfid-Harzes und (B) 0,05 bis 100 Gewichtsteile wenigstens eines gaseinfangenden Reagenzes, ausgewählt aus Zinkcarbonat, Zinkhydroxid und einem Komplexsalz aus Zinkcarbonat und Zinkhydroxid.

2. Zusammensetzung gemäß Anspruch 1, in welcher das Polyarylensulfid-Harz (A) ein im wesentlichen lineares Homopolymer ist, das p-Phenylensulfid-Gruppen als Repetiereinheiten umfaßt.

3. Zusammensetzung gemäß Anspruch 1, in welcher das Polyarylensulfid-Harz (A) ein Copolymer ist, das p-Phenylensulfid- und m-Phenylensulfid-Gruppen umfaßt.

4. Zusammensetzung gemäß irgendeinem der vorhergehenden Ansprüche, in welcher die Menge an Komponente (B) 0,1 bis 40 Gewichtsteile pro 100 Gewichtsteile der Komponente (A) ist.

5. Zusammensetzung gemäß irgendeinem der vorhergehenden Ansprüche, die weiterhin (C) bis zu 400 Gewichtsteile eines anorganischen Füllstoffs, der vom gaseinfangenden Reagenz (B) verschieden ist, umfaßt, wobei der Füllstoff in Form von Fasern, Teilchen und/oder Plättchen vorliegt.

6. Zusammensetzung gemäß Anspruch 5, in welcher die Menge an Füllstoff (C) 10 bis 250 Gewichtsteile pro 100 Gewichtsteile der Komponente (A) beträgt.

7. Zusammensetzung gemäß Anspruch 5 oder 6, in der der Füllstoff (C) Glasfasern oder Kohlenstoff-Fasern umfaßt.

8. Zusammensetzung gemäß Anspruch 5, welche als den Füllstoff (C) 10 bis 400 Gewichtsteile Glasfasern und einen anderen Füllstoff in Form von Teilchen oder Plättchen umfaßt.

9. Geformter Gegenstand der Zusammensetzung gemäß irgendeinem der vorhergehenden Ansprüche.

10. Teile für eine elektrische oder elektronische Anwendung umfassend einen aus der Zusammensetzung geformten Gegenstand gemäß irgendeinem der vorhergehenden Ansprüche und einen aus Metall hergestellten Kontakt.

## Revendications

1. Une composition à base de résine de sulfure de polyarylène qui comprend (A) 100 parties en poids d'une résine de sulfure de polyarylène et (B) 0,05 à 100 parties en poids d'au moins un agent piégeant les gaz choisi parmi le carbonate de zinc, l'hydroxyde de zinc et un sel complexe de carbonate de zinc et d'hydroxyde de zinc.

2. Une composition selon la revendication 1 dans laquelle la résine de sulfure de polyarylène (A) est un homopolymère sensiblement linéaire comprenant des groupements sulfure de p-phénylène comme unités répétées.

3. Une composition selon la revendication 1 dans laquelle la résine de sulfure de polyarylène (A) est un copolymère comprenant des groupements sulfure de p-phénylène et sulfure de m-phénylène.

4. Une composition selon l'une quelconque des revendications précédentes, dans laquelle la quantité du composant (B) est de 0,1 à 40 parties en poids pour 100 parties en poids du composant (A).

5. Une composition selon l'une quelconque des revendications précédentes qui comprend en outre (C) une quantité pouvant atteindre 400 parties en poids d'une charge inorganique autre que l'agent piégeant les gaz (B), la charge étant sous forme de fibres, particules et/ou lamelles.

6. Une composition selon la revendication 5, dans laquelle la quantité de charge (C) est de 10 à 250 parties en poids pour 100 parties en poids du composant (A).

7. Une composition selon la revendication 5 ou la revendication 6, dans laquelle la charge (C) comprend des fibres de verre ou des fibres de carbone.

8. Une composition selon la revendication 5, qui comprend comme charge (C) 10 à 400 parties en poids de fibres de verre et une autre charge sous forme de particules ou de lamelles.

9. Un article moulé de la composition telle que définie dans l'une quelconque des revendications précédentes.

10. Pièces pour un dispositif électrique ou électronique qui comprennent un article moulé de la composition telle que définie dans l'une quelconque des revendications précédentes et une connexion faite de métal.